(19) Europäisches Patentamt
European Patent Office
Office européen des brevets

(11) **EP 2 482 184 A1**

(12) **EUROPEAN PATENT APPLICATION**

(43) Date of publication:
**01.08.2012 Bulletin 2012/31**

(51) Int Cl.:
**G06F 9/44** (2006.01)          **G06F 9/455** (2006.01)
**G06F 21/00** (2006.01)

(21) Application number: **11152843.6**

(22) Date of filing: **01.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Irdeto B.V.**
**2132 LS  Hoofddorp (NL)**

(72) Inventors:
 • **Benedetti, Ettore**
  **2132 LS, Hoofddorp (NL)**
 • **van Foreest, Arnoud Evert**
  **2132 LS, Hoofddorp (NL)**

(74) Representative: **Pelly, Jason Charles et al**
 **Boult Wade Tennant**
 **Verulam Gardens**
 **70 Gray's Inn Road**
 **London WC1X 8BT (GB)**

(54) **Adaptive obfuscated virtual machine**

(57)    The invention enables the generation of an obfuscated bytecode for execution in an adaptive VM execution environment. A VM compiler compiles a high level code to obtain the bytecode 15b and applies a V-ISA definition to generate an optimized instruction combining two or more individual instructions in the bytecode. The VM execution environment is adapted to interpret and execute the optimized instruction.

Fig.4

**Description**

FIELD OF THE INVENTION

The present invention relates to virtual machines. More specifically the invention relates to techniques for running obfuscated software in a virtual machine environment.

BACKGROUND

An instruction set, or instruction set architecture (ISA), is a part of a computer architecture related to programming, including the native data types, instructions, registers, addressing modes, memory architecture, interrupt and exception handling, and external I/O. An ISA includes a specification of the set of opcodes (machine language), and the native commands implemented by a particular processor.

An instruction set architecture is distinguished from a micro-architecture, which is a set of processor design techniques used to implement an instruction set. Computers with different micro-architectures can share a common instruction set. For example, the Intel Pentium and the AMD Athlon implement nearly identical versions of the x86 instruction set, but have different internal designs.

TIMI (Technology-Independent Machine Interface) is an example of a technology that extends the possibilities of an ISA. TIMI is an ISA that is implemented by low-level software translating TIMI code into "native" machine code, and functionally resembles what is nowadays referred to as a virtual machine (VM). It was designed to increase the longevity of a computer platform and applications written for it, allowing the entire platform to be moved to very different hardware without having to modify any software except that which translates TIMI into native machine code, and the code that implements services used by the resulting native code. This allows software to move from e.g. a complex instruction set computer (CISC) architecture to a reduced instruction set computing (RISC) architecture without having to rewrite or recompile any parts of the OS or software associated with it other than the aforementioned low-level code.

A VM is a software implementation of a machine (i.e. of a computer) that executes programs like a physical machine. VMs can be separated into two major categories, based on their use and degree of correspondence to any real machine. A system VM provides a complete system platform which supports the execution of a complete operating system (OS). A process VM is designed to run a single program, which means that it supports a single process. Typically, software running inside a VM is limited to the resources and abstractions provided by the VM.

A system VM (also known as hardware VM) allows the sharing of the underlying physical machine resources between different VMs, each running its own operating system. The software layer providing the virtualization is called a VM monitor or hypervisor. A hypervisor can run on bare hardware (Type 1 or native VM) or on top of an operating system (Type 2 or hosted VM).

A process VM (also known as application VM) runs as a normal application inside an OS and supports a single process. It is typically created when the process is started and destroyed when it exits. Its purpose is to provide a platform-independent programming environment that abstracts away details of the underlying hardware or operating system, and allows a program to execute in the same way on any platform. A process VM provides a high-level abstraction, i.e. that of a high-level programming language (compared to the low-level ISA abstraction of the system VM). Process VMs are implemented using an interpreter. Examples of process VMs are the Java virtual machine for Java programming language applications, the Parrot virtual machine, which serves as an abstraction layer for several interpreted languages, and the Common Language Runtime VM for running .NET Framework applications.

Known processor architectures are an optimization trade off between operating speed, code size and power consumption. The trade off depends on the types of applications that the processor is targeting. This has resulted in a fairly large number of processor architectures each with a unique instruction set. If an application is to be available on a heterogeneous network of computing devices, thus potentially with a lot of different processors, the application needs to overcome portability problems.

VMs can be used to achieve, at development time, total independence from the actual hardware environment on which the software program is to be deployed. This improves development efficiency as the application only needs to be tested on a single VM. VM interpreters on various target platforms take care of the hardware dependencies.

A distinction can be made between implementation instruction set architectures (I-ISA), i.e. the actual ISA implemented by the hardware, and virtual instruction set architectures (V-ISA), i.e. the virtualized ISA presented to the software. The VM is a special, non-portable application that mediates the two. In order to execute a V-ISA based portable application on a certain platform, the VM has to be constructed and tested first using the specific I-ISA of such platform.

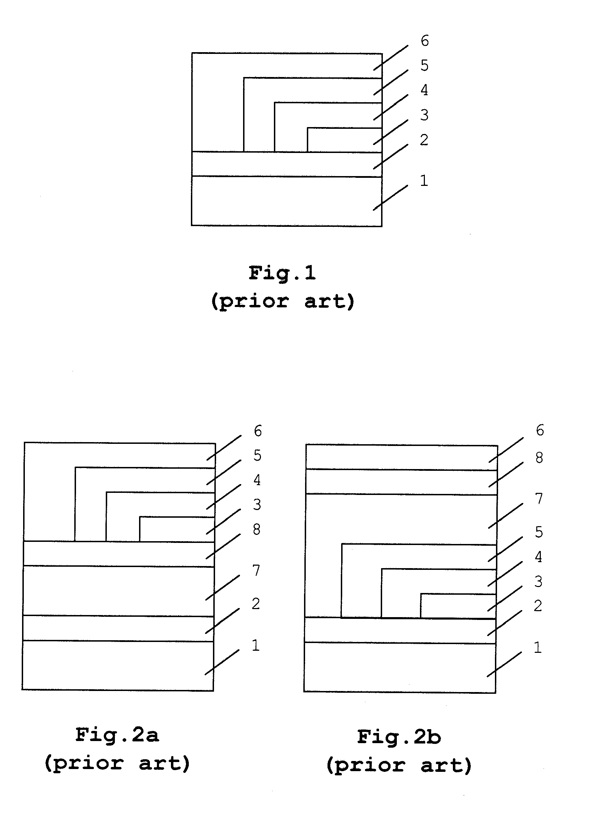

In Fig.1 an example is shown of how software can interact with hardware in an I-ISA computer environment. A stack of hardware and software components is visualized wherein adjacent layers of the stack are communicatively connected. Hardware processor 1 interacts with software layer 3 and possibly with software layers 4, 5 and 6 using the processor specific instruction set defined by I-ISA layer 2. In the example of Fig. 1 the software layers 3, 4, 5 and 6 contain device driver code, kernel code, operating system code and application software, respectively.

In Fig.2a an example is shown of how software can interact with hardware in a V-ISA computer environment implementing a system VM. A stack of hardware and software components is visualized wherein adjacent layers of the stack are communicatively connected. Hardware processor 1 interacts with a VM 7 through the processor specific instruction set defined by I-ISA layer 2. The VM 7 translates the processor specific instructions into the virtual instruction set as defined by the V-ISA layer 8. The VM 7 interacts with software layer 3 and possibly with software layers 4, 5 and 6 using the virtual instruction set defined by the V-ISA layer 8. In the example of Fig.2a the software layers 3, 4, 5 and 6 contain device driver code, kernel code, operating system code and application software, respectively.

In Fig.2b an example is shown of how software can interact with hardware in a V-ISA computer environment implementing a process VM. A stack of hardware and software components is visualized wherein adjacent layers of the stack are communicatively connected. Hardware processor 1 interacts with software layer 3 and possibly with software layers 4 and 5 using the processor specific instruction set defined by I-ISA layer 2. In the example of Fig. 2b the software layers 3, 4 and 5 contain device driver code, kernel code and operating system code, respectively. Operating system code 5 interacts with a VM 7 using OS specific APIs. Optionally or alternatively the hardware processor 1 interacts with the VM 7 through the processor specific instruction set defined by I-ISA layer 2. The VM 7 translates the OS APIs and/or processor specific instructions into the virtual instruction set as defined by the V-ISA layer 8. The VM 7 interacts with application software 6 using the virtual instruction set defined by the V-ISA layer 8.

Similar to hardware processor architectures, VMs differ in their core architecture depending on the high-level properties of the design objectives such as e.g. propensity to just-in-time (JIT) compilation, robustness and object orientation. Typically, VM designs are lean and simple. V-ISAs typically resemble the simplest classes of I-ISAs (e.g. RISC), so as to increase their flexibility in terms of applications that can run on them, and limit the effort to port the VM to another I-ISA.

VMs are known to be used as a security measure against software reverse engineering. Such VMs may use an undocumented and possibly diversified instruction set or obfuscation technique that provides an additional hurdle for an adversary. VM designs are known to support unorthodox instructions to thwart static analysis attempts.

Obfuscation techniques aim - in general - at maintaining the semantics of an original piece of software, while making its final representation unintelligible.

Since most software algorithms are expressed in some form of high-level programming language, the simple act of compiling into machine level (for some defined machine) could be regarded as a form of obfuscation in itself, especially when deep optimizations are employed.

A large part of known obfuscation techniques operate at machine level, e.g. directly on Java bytecode or on a x86 platform. More effective obfuscation techniques operate at the highest possible abstraction level in order to fully exploit contextual information. Such high level obfuscation techniques are particularly effective when they rely on hard to simplify mathematical constructs which are applied to both program data and control flow. The high level obfuscation techniques achieve their obfuscation properties without relying on the characteristics of the target processor(s).

A device for implementing the high level obfuscation of a program is called a transcoder. A transcoder typically transforms a source code in an obfuscated variant of the source code in a high level programming language which may be the same as the programming language of the original source code.

Testing of obfuscated programs aims at verifying that the obfuscated application implements the same functionality as the original program. Compilers for different target machines may generate code that behaves different than the original application. Hence, it is necessary to perform functionality testing for each target platform. In embedded software applications, there are potentially a lot of different target platforms each with different instruction sets and different compiler tool chains.

It is to be understood that compiling may include linking.

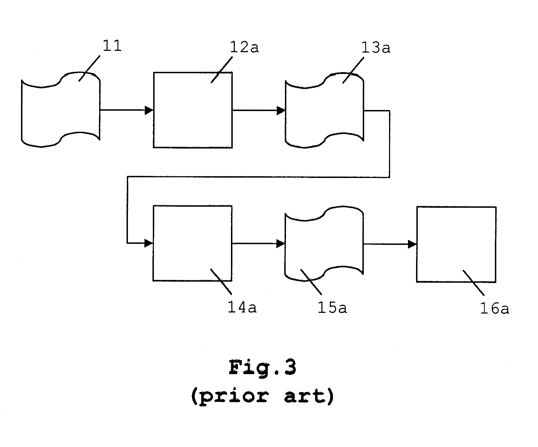

In order to reduce the number of required test runs, it is known that an obfuscated source code can be compiled to run on a VM. Fig.3 shows an example of a prior art tool chain for use with a VM. The tool chain shows the step of transforming a source code 11 into an obfuscated version 13a of the source code by a transcoder 12a. The obfuscated version 13a of the source code is compiled by a VM compiler 14a into a bytecode 15a, i.e. a representation of the obfuscated logic according to the V-ISA of the VM. The bytecode 15a is executable in VM execution environment 16a.

By using a VM in the tool chain it can be avoided that multiple tool chains are required to transform the source code 11 into an obfuscated bytecode for a specific I-ISA.

The transcoder 12a uses an obfuscation toolset to transform the source code 11 into the obfuscated version 13a of the source code. The obfuscation toolset typically contains a collection of obfuscation techniques that may be activated for a particular application.

High level obfuscation of programs generally results in a significant decrease in performance and an increase in code size when executed on and compiled for state of the art instruction sets. The use of VM techniques further decreases performance, especially when the VM does not support optimization techniques such as ahead-of-time (AOT) or just-in-time (JIT) compilation. Hence, the combination of high level obfuscation techniques and known VM techniques results in a dramatic decrease in performance. There is a need for an improved technique for running obfuscated software in a VM environment that does not suffer from the above described performance drawbacks.

SUMMARY OF THE INVENTION

The invention enables the generation of a bytecode for execution in an adaptive VM execution environment.
According to an aspect of the invention a computer-implemented method is proposed for generating a bytecode for execution in a VM execution environment. The method comprises compiling by a VM compiler of a high level code to obtain the bytecode 15b. The compiling comprises applying a V-ISA definition to generate an optimized instruction combining two or more individual instructions in the bytecode 15b. The VM execution environment is adapted to interpret and execute the optimized instruction.
Thus, an obfuscated bytecode can be generated that runs in a VM that is specifically adapted to the obfuscated bytecode. A performance gain is achieved by including optimized instructions in the bytecode that are recognized by the VM execution environment. I.e. a single (complex) instruction is interpreted and mapped to a sequence of native instructions, removing the need to read and write intermediate values from and to the VM's virtual stack.
The high level code is e.g. an obfuscate version of a source code or any other form of high level code comprising complex semantics.
The embodiment of claim 2 advantageously enables the obfuscation of the bytecode to be prepared in high level intermediate code.
The high level intermediate code is e.g. an obfuscate version of the source code or any other form of high level intermediate code comprising complex semantics.
The embodiment of claim 3 advantageously enables complex instructions to be defined in the transformation stage enabling the high level intermediate code to contain the complex instructions and enabling the adaptively generated VM execution environment to recognize the complex instructions.
The embodiment of claim 4 advantageously enables the functionalities of the transcoder and the VM compiler to be combined in a single module and its functionalities to be combined in a combined process.
The embodiment of claim 5 advantageously enables the adaptive VM execution environment to be generated dynamically. Moreover, it allows the obfuscation and/or V-ISA used to generate the bytecode to be changed in time, in which case the VM execution environment will be regenerated to comply with the changed bytecode.
The embodiment of claim 6 advantageously enables the adaptive VM execution environment to be generated and ready when it is needed, even if the V-ISA changes frequently.
The embodiment of claim 7 advantageously enables the adaptive VM execution environment to be generated and ready when it is needed, without having the use processing power to generate the VM execution environment.
According to further aspects of the invention a transcoder, a VM compiler, a transcoder-compiler, a VM source code generator and a target compiler are proposed as used in one or more of the above described methods.
According to an aspect of the invention a computer program element is proposed, which, when being executed by a processor, is adapted to carry out one or more of the above described methods.
Hereinafter, embodiments of the invention will be described in further detail. It should be appreciated, however, that these embodiments may not be construed as limiting the scope of protection for the present invention.

BRIEF DESCRIPTION OF THE DRAWINGS

Aspects of the invention will be explained in greater detail by reference to exemplary embodiments shown in the drawings, in which:

Fig.1 shows an example of a representation of a stack of hardware and software components in a prior art I-ISA computer environment;
Fig.2a shows an example of a representation of a stack of hardware and software components in a prior art V-ISA computer environment implementing a system VM;
Fig.2b shows an example of a representation of a stack of hardware and software components in a prior art V-ISA computer environment implementing a process VM;
Fig.3 shows an example of a prior art tool chain with intermediate results;
Fig.4 shows a tool chain with intermediate results of an exemplary embodiment of the invention; and
Fig.5 shows another tool chain with intermediate results of an exemplary embodiment of the invention.

DETAILED DESCRIPTION OF THE DRAWINGS

The invention reduces the penalty of the virtual machine execution of high level obfuscated software applications by adapting the chosen virtual instruction set of the V-ISA to the code and data transformations generated by the transcoder implementing the high level obfuscation techniques.

The invention differs from other optimization techniques such as ahead-of-time (AOT) and just-in-time (JIT) compiling. Existing optimizations operate on the instruction level and typically optimize the execution of (a group of) instructions. The invention enables optimization at the source code level, wherein more abstract information can be used to increase performance. Moreover AOT/JIT compilers are difficult and expensive techniques to employ, because each platform not only requires a simple and portable VM interpreter to harmonize the V-ISA to the I-ISA, but also a scaled-down, native compiler that embeds knowledge of the specific I-ISA.

The invention creates the virtual instruction set as a complex set of particular code constructs that are inherent to the specific obfuscation and data transform techniques which achieves a further level of obfuscation. The obfuscation techniques apply code and data transformations to the high-level representation of a software application (e.g. its source code). This results in a functionally equivalent but obfuscated high level representation of the software that is very difficult to reverse engineer. The obfuscated high-level representation (e.g. the obfuscated source code) is then compiled for the V-ISA, i.e. the target platform on which the code is intended to be executed.

Further obfuscation at the machine level can be applied for additional protection. It is generally accepted that high-level obfuscation can withstand a much larger class of attacks than low-level obfuscation alone. Examples of mathematical constructs typically used for high-level obfuscation are affine transformations, polynomial transformations, matrix transpositions and mixed boolean algebraic logic.

According to the invention a particular (virtual machine) instruction set is selected that efficiently supports the source code generated by the high level obfuscation techniques. The interpreter can embed such knowledge and map the patterns into an efficient and compact instruction execution.

Such mapping can either be static, meaning that is has been established at the moment the virtual machine was built for the given platform, or dynamic, meaning that information about such mapping has been communicated at a second stage and the relevant sequence of machine instructions has been produced in loco. While the first approach is more straightforward and does not rely on any form of bytecode translation at run-time, the second approach opens avenues for dynamic diversification of the virtual instruction set. For example the virtual instruction set may be different per application or may change during the execution of a single application.

In addition to a low-overhead interpreted execution, the invention advantageously enables an increase in overall security level.

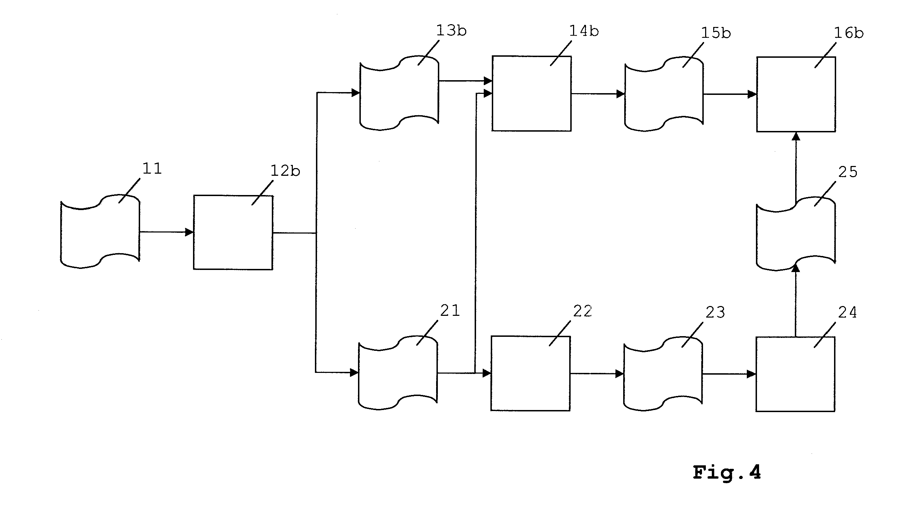

Fig.4 shows a tool chain for implementing an adaptive obfuscated VM of an exemplary embodiment of the invention. The tool chain shows the step of transforming a source code 11 into a high level intermediate code 13b by a transcoder 12b. The high level intermediate code 13b is compiled by a VM compiler 14b into a bytecode 15b, i.e. a representation of the obfuscated logic according to the V-ISA of the VM. It is to be understood that compiling may include linking. The bytecode 15b can be executed in a VM execution environment 16b. The transcoder 12b uses an obfuscation toolset to transform the source code 11 into the high level intermediate code 13b. The obfuscation toolset typically contains a collection of obfuscation techniques that may be activated for a particular application.

The high level intermediate code 13b is e.g. an obfuscate version of the source code or any other form of high level intermediate code comprising complex semantics.

The transcoder 12b is a modified version of the transcoder 12a as shown in Fig.3. During a high level obfuscation analysis, transcoder 12b determines the V-ISA of the VM execution environment 16b, wherein the V-ISA is optimized for the obfuscation techniques used to transform the source code 11 into the high level intermediate code 13b. More precisely, specific instructions may be included in the V-ISA to carry out (at least part of) a complex obfuscation construct, that would otherwise require several generic instructions. A V-ISA definition 21 defining the thus determined V-ISA is generated by the transcoder 12b.

Since an interpretation of any instruction has a substantially fixed overhead, i.e. the interpretation of a complex obfuscation construct has substantially the same overhead as the interpretation of a generic instruction, execution efficiency increases by virtue of the fact that the total number of instructions is reduced in the high level intermediate code 13b.

The V-ISA definition 21 typically includes a machine definition (e.g. defining registers and a memory model), instruction encoding (used to build the parser in the VM interpreter, and an assembler in the VM tool chain), and instruction semantics (used to build the instruction handler in the VM interpreter, and the instruction selector/scheduler in the compiler).

The VM compiler 14b uses the V-ISA definition 21 to generate the bytecode 15b using the specified instruction set format.

A VM source code generator 22 generates a VM source code 23 from the V-ISA definition 21. The VM source code generator 22 is designed to generate the VM source code 23 such that it is compatible with a wide range of target platforms.

A target compiler 24 compiles the VM source code 23 into a VM interpreter code 25, i.e. a representation of a VM using the I-ISA of the hardware whereon the VM is to be operative. Running the VM interpreter code 25 creates the VM execution environment 16b for executing the bytecode 15b.

As the transcoder 12b generates a high level intermediate code 13b that efficiently maps to the associated V-ISA definition 21, the VM compiler 14b can build a bytecode 15b that is both compact and fast in execution. Thus a more efficient execution of obfuscated source code primitives is achieved.

Transcoder 12b may determine the V-ISA of the VM execution environment 16b in various manners.

In an exemplary embodiment the transcoder logic of the transcoder 12b and the obfuscation toolset are configured to have limited influence on the whole V-ISA. In this exemplary embodiment the machine definition (e.g. whether it is stack- or register-based, word size, memory access logic, system call and exception mechanism, and arithmetic flags) and the generic encoding rules (e.g. instruction size, addressing modes, and immediates) are fixed, specifically optimized so that interpretation incurs in low-overhead, and therefore not dependent on which obfuscation constructs are used. The V-ISA includes the basic, generic instructions that may also be found in conventional V-ISAs. Although these instructions may not get eventually included in the obfuscated application in V-ISA form as specific and complex instructions are preferred, they are still useful in that they provide a degree of flexibility. The part of the V-ISA that is particularly influenced by the transcoder 12b is the complex instructions part. Each particular obfuscation method enabled by the obfuscation toolset may define and get associated to one instruction. When the transcoder 12b selects a particular method it also ensures that the corresponding V-ISA definition output 21 includes the associated instructions.

In another exemplary embodiment the transcoder logic of the transcoder 12b and the obfuscation toolset may be configured for more complex approaches that involve changes in virtual machine definition, instruction encoding, and basic instruction set according to the obfuscation logic selected by the transcoder 12b.

The V-ISA definition 21 generated by the transcoder 12b is not limited in the number of instructions that it can support. As an instruction lookup is generally a look up operation, there is no real benefit in encoding optimizations, although it is not ruled out that encoding optimizations take place.

The V-ISA definition 21 is used as a basis to create the VM execution environment 16b. The V-ISA definition 21 specifies the actions for a particular V-ISA component in a format that enables the generation of the high level programming language constructs that implement the actions controlled by the component.

The compiler 14b is configured to support the V-ISA definition 21 to generate the bytecode 15b from the high level intermediate code 13b. Existing compiler tools may be used as they typically support multiple instruction sets and thus can be configured to use the V-ISA definition if not too complex. The instruction sets are generally included into the back-end of the compiler. E.g. GNU compilers internally use a back-end independent intermediate representation (IR) for the application being compiled, and use a target specific code generator to select the optimal sequence instructions for the target machine.

In case the V-ISA definition contains complex instructions that are not easily identifiable within the IR, an existing compiler cannot be used and a modified compiler is required.

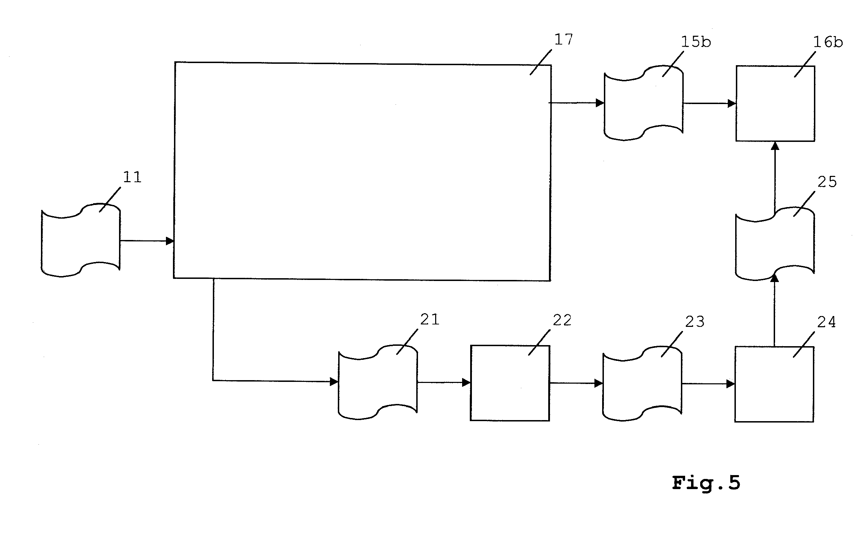

The transcoder 12b and the VM compiler 14b can be combined in a transcoder-compiler module 17, as shown in Fig.5. The transforming of the source code 11 and the compiling of the high level intermediate code 13b are then performed in a combined transcoding-compiling process. The V-ISA definition 21 is generated by the transcoder-compiler module 17 and used internally by the transcoder-compiler module 17 in the compilation step.

The following example shows a simple source code of a software program that is obfuscated and then mapped to a V-ISA. A comparison is made with a prior art VM approach to demonstrate the difference and performance gains. A Java notation is used, but it is to be understood that the invention is not limited to Java source codes.

The following source code 11 provides for a counter starting from the value i=5 which is incremented in steps of 1. If the threshold value of j=6 is reached an action is performed. For the purpose of keeping this example simple, the action is not further specified and identified by "do something".

```
public static void main(String[] args) {
      int i, j;
      i = 5;
      j = increment (i) ;
      if (j == 6) {
            // do something
       }
}
public static int increment(int i) {
      return i + 1;
  }
```

The source code 11 is input to transcoder 12b. The obfuscation toolset of the transcoder 12b defines the following transformations to the input and output of the increment function, and are applied to the source code 11.

$$\text{transform A} \rightarrow T_a(x) = (x * 28) + 10$$

$$\text{transform B} \rightarrow T_b(y) = (y * 14) - 24$$

The resulting obfuscated version 13b of the source code then becomes:

```
public static void main(String[] args) {
     int i, j;
     i = 150; /** Ta domain **/
     j = increment(i); /** input parameter
 in Ta
                              domain, return
 value
                              in Tb domain **/
     if (j == 60) { /** Tb domain **/
          // do something
     }
}
public static int increment(int i) {
     return i / 2 - 15; /** From Ta domain
                              to Tb domain **/
}
```

The transcoder 12b further creates a virtual instruction set for the increment function, which definition is output as the V-ISA definition 21. It is possible that the V-ISA definition is predefined. The VM compiler 14b applies the V-ISA definition 21 to the compiling of the obfuscated version 13b of the source code to generate the following bytecode 15b.

```
.main:

     0 sipush 150
     3 istore_1
     4 iload_1
     5 invokestatic #16 <.increment>
     8 istore_2
     9 iload_2
     10 bipush 60
     12 if_icmpne 23 (+11)
     15 ... do something ...
     23 return

.increment:

     0 iload_0
     1 xc_obfuscated_inc_operation
     2 ireturn
```

By contrast, a prior art VM compiler 14a would generate the following bytecode 15a from the same obfuscated version of the source code.

```
.main:

     0 sipush 150
     3 istore 1
```

```
4 iload_1
5 invokestatic #16 <.increment>
8 istore_2
9 iload_2
10 bipush 60
12 if_icmpne 23 (+11)
15 ... do something ...
23 return
```

.increment:

```
0 iload_0
1 iconst_2
2 idiv
3 bipush 15
5 isub
6 ireturn
```

Executing bytecode 15b in VM execution environment 16b is more efficient compared to executing the prior art bytecode 15a in a prior art VM execution environment 16a. A performance gain is achieved by not having to map four individual instructions (iconst_2, idiv, bipush 15, isub) to their corresponding native instructions, with the need to read input parameters from the stack and writing the result back to the VM's stack each time. Instead only the optimized instruction, i.e. the single (complex) instruction xc_obfuscated_inc_operation, is interpreted and mapped to a sequence of native instructions (divide by 2, subtract 15) instead, removing the need to read and write intermediate values from and to the VM's virtual stack.

The VM execution environment 16b can be generated dynamically, i.e. substantially at the same time as the generation of the bytecode 15b. This enables the VM execution environment 16b to adapt to the specific V-ISA definition 21 used by the VM compiler 14b in the compilation of the obfuscated version 13b of the source code into the bytecode 15b.

The V-ISA definition 21 can be generated by the transcoder 12b. Alternatively the V-ISA definition 21 is predefined or there are a number of predefined V-ISA definitions from which one can be chosen for generating the bytecode 15b.

It is possible that the VM execution environment 16b is precompiled using a predefined V-ISA definition 21. In this case the VM execution environment is not created substantially at the same time as the bytecode 15b, but already available for execution of the bytecode 15b.

Although the level of obfuscation of the software will be less, it is possible to skip the obfuscation of the source code 11 using the obfuscation toolset in the transcoder 12b. In this variant the obfuscated version 13b of the source code is identical to the source code 11. The VM compiler 14b applies the V-ISA definition 21 to the source code to generate the bytecode 15b, which in itself is a form of obfuscation.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable non-transitory storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory or flash memory) on which alterable information is stored. Moreover, the invention is not limited to the embodiments described above, which may be varied within the scope of the accompanying claims.

**Claims**

1.  A computer-implemented method for generating a bytecode 15b for execution in a VM execution environment 16b, the method comprising:

    compiling by a VM compiler 14b of a high level code to obtain the bytecode 15b,

wherein the compiling comprises:

> applying a V-ISA definition 21 to generate an optimized instruction combining two or more individual instructions in the bytecode 15b,
> and wherein the VM execution environment 16b is adapted to interpret and execute the optimized instruction.

**2.** The method according to claim 1, further comprising:

> transforming by a transcoder 12b of the source code 11 into a high level intermediate code 13b,
> and wherein the VM compiler 14b compiles the high level intermediate code 13b to obtain the bytecode 15b.

**3.** The method according to claim 2, further comprising:

> generating by the transcoder 12b of the V-ISA definition 21.

**4.** The method according to any one of the claims 2-3, wherein the transcoder 12b and the VM compiler 14b are combined in a transcoder-compiler module 17, wherein the transforming of the source code 11 and the compiling of the high level intermediate code 13b are performed in a combined transcoding-compiling process, and wherein the V-ISA definition 21 is generated by the transcoder-compiler module 17.

**5.** The method according to any one of the claim 1-4, further comprising:

> generating by a VM source code generator 22 of a VM source code 23 using the V-ISA definition 21; and
> compiling by a target compiler 24 of the VM source code 23 to obtain a VM interpreter code 25,
> wherein the VM interpreter code 25, when being executed by a processor, forms the VM execution environment 16b.

**6.** The method according to claim 5, wherein the bytecode 15b and the VM interpreter code 25 are obtained substantially at the same time.

**7.** The method according to claim 5, wherein the VM interpreter code 25 is compiled ahead-of-time and wherein the bytecode 15b is obtained just-in-time.

**8.** A transcoder 12b configured to:

> transform a source code 11 into a high level intermediate code 13b; and
> generate a V-ISA definition 21 enabling a VM compiler 14b to generate an optimized instruction combining two or more individual instructions in a bytecode 15b.

**9.** A VM compiler 14b configured to:

> compile a high level code to obtain a bytecode 15b for execution in a VM execution environment 16b adapted to interpret and execute an optimized instruction; and
> apply a V-ISA definition 21 to generate the optimized instruction combining two or more individual instructions in the bytecode 15b.

**10.** A transcoder-compiler 17 configured to:

> transform and compile a source code 11 into a bytecode 15b for execution in a VM execution environment adapted to interpret and execute an optimized instruction;
> generate a V-ISA definition 21 and apply the V-ISA definition 21 to generate an optimized instruction combining two or more individual instructions in the bytecode 15b.

**11.** A VM source code generator 22 configured to:

> generate a VM source code 23 using a V-ISA definition 21 to enable a target compiler 24 to compile the VM source code 23 to obtain a VM interpreter code 25 which, when being executed by a processor, forms a VM execution environment 16b adapted to interpret and execute an optimized instruction in a bytecode 15b obtained by a VM compiler 14b by applying the V-ISA definition 21 to a compilation of a high level intermediate code 13b.

12. A target compiler 24 configured to:

compile a VM source code 23, the VM source code 23 having been generated by a VM source code generator 22 using a V-ISA definition 24, to obtain a VM interpreter code 25 which, when being executed by a processor, forms a VM execution environment 16b adapted to interpret and execute an optimized instruction in a bytecode 15b obtained by a VM compiler 14b by applying the V-ISA definition 21 to a compilation of a high level intermediate code 13b.

13. A computer program element, which, when being executed by a processor, is adapted to carry out the method according to any one of the claims 1-7.

**Fig.1**
**(prior art)**

**Fig.2a**
**(prior art)**

**Fig.2b**
**(prior art)**

**Fig.3**
**(prior art)**

Fig. 4

Fig. 5

Europäisches
Patentamt

European
Patent Office

Office européen
des brevets

# EUROPEAN SEARCH REPORT

Application Number

EP 11 15 2843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANCKAERT B ET AL: "Proteus: Virtualization for diversified tamper-resistance", PROCEEDINGS OF THE ACM CONFERENCE ON COMPUTER AND COMMUNICATIONS SECURITY - PROCEEDINGS OF THE ACM WORKSHOP ON DIGITAL RIGHTS MANAGEMENT, DRM '06, CO-LOCATED WITH THE 13TH ACM CONFERENCE ON COMPUTER AND COMMUNICATIONS SECURITY, CCS'06 2006 ASSOCIATIO, 2006, pages 47-57, XP002640029, DOI: DOI:10.1145/1179509.1179521 | 1,9,13 | INV.<br>G06F9/44<br>G06F9/455<br>G06F21/00 |
| Y | * abstract *<br>* page 48, left-hand column, paragraph 7 *<br>* page 49, left-hand column, paragraph 6 - right-hand column, paragraph 3 *<br>* page 50, left-hand column, paragraph 4 *<br>* page 50, right-hand column, paragraph 3 - page 52, right-hand column, last paragraph; figure 1 *<br>* page 55, right-hand column, paragraph 3 - paragraph 4 * | 2-8,10 | |

-----

-/--

TECHNICAL FIELDS
SEARCHED      (IPC)

G06F

The present search report has been drawn up for all claims

| Place of search | Date of completion of the search | Examiner |
|---|---|---|
| Munich | 6 June 2011 | Lelait, Sylvain |

EPO FORM 1503 03.82 (P04C01)

EP 2 482 184 A1

EUROPEAN SEARCH REPORT

Application Number

EP 11 15 2843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ERTL M A ET AL: "VMGEN-A GENERATOR OF EFFICIENT VIRTUAL MACHINE INTERPRETERS", SOFTWARE PRACTICE & EXPERIENCE, WILEY & SONS, BOGNOR REGIS, GB, vol. 32, no. 3, 1 March 2002 (2002-03-01), pages 265-294, XP001087296, ISSN: 0038-0644, DOI: DOI:10.1002/SPE.434 | 11,12 | |
| Y | * abstract *<br>* page 266, paragraph 4 - page 267, paragraph 9 *<br>* page 269, paragraph 4 - page 270, paragraph 2; figure 4 *<br>* page 272, paragraph 1 - last paragraph *<br>* page 274, paragraph 5 - page 276, paragraph 1 *<br>* page 276 - paragraph 6 *<br>* page 281, paragraph 4 - page 285, paragraph 4 *<br>* page 283, paragraph 4 - last paragraph * | 5-7 | |
| X | US 2008/127125 A1 (ANCKAERT BERTRAND [BE] ET AL) 29 May 2008 (2008-05-29) | 1,9,13 | TECHNICAL FIELDS SEARCHED (IPC) |
| Y | * page 1, paragraph 4; figures 2,3 *<br>* page 1, paragraph 21 - page 2, paragraph 33 *<br>* page 3, paragraph 39 - paragraph 42 *<br>* page 3, paragraph 51 - page 4, paragraph 61 *<br>* page 5, paragraph 68 - paragraph 76 *<br>* page 6, paragraph 80 - page 7, paragraph 90 *<br>* page 9, paragraph 126 - paragraph 128; claim 1 * | 2-8,10 | |

-/--

The present search report has been drawn up for all claims

| Place of search | Date of completion of the search | Examiner |
|---|---|---|
| Munich | 6 June 2011 | Lelait, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

Europäisches
Patentamt

European
Patent Office

Office européen
des brevets

## EUROPEAN SEARCH REPORT

Application Number

EP 11 15 2843

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2009/108245 A2 (UNIV VIRGINIA [US]; DAVIDSON JACK W [US]; HISER JASON D [US]) 3 September 2009 (2009-09-03) * abstract * * page 2, line 3 - line 15 * * page 4, line 23 - last line * * page 5, line 28 - page 8, line 5 * * page 10, line 1 - page 11, line 25 * * page 13, line 18 - page 15, line 4 * * page 16, line 3 - line 9; claims 1,2,8-11,32,-34; figures 2-4 * ----- | 2-4,8,10 | |
| A | US 2005/028132 A1 (SRINIVASAMURTHY VENUGOPAL K [IN] ET AL) 3 February 2005 (2005-02-03) * abstract * * page 1, paragraph 10 - page 2, paragraph 23 * * page 3, paragraph 46 - paragraph 51 * * page 4, paragraph 57 - paragraph 59 * * page 4, paragraph 66 - page 5, paragraph 69 * * page 5, paragraph 75 * ----- | 1-13 | |
| A | SUDEEP GHOSH ET AL: "A Secure and Robust Approach to Software Tamper Resistance", 28 June 2010 (2010-06-28), INFORMATION HIDING, SPRINGER BERLIN HEIDELBERG, BERLIN, HEIDELBERG, PAGE(S) 33 - 47, XP019154551, ISBN: 978-3-642-16434-7 * abstract * * page 34, paragraph 4 - paragraph 8 * * page 35, paragraph 3 - paragraph 4 * * page 36, last paragraph - page 37, paragraph 1 * ----- | 1-13 | TECHNICAL FIELDS SEARCHED (IPC) |

The present search report has been drawn up for all claims

| Place of search | Date of completion of the search | Examiner |
|---|---|---|
| Munich | 6 June 2011 | Lelait, Sylvain |

EPO FORM 1503 03.82 (P04C01)

## ANNEX TO THE EUROPEAN SEARCH REPORT
## ON EUROPEAN PATENT APPLICATION NO.

EP 11 15 2843

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2011

| Patent document cited in search report | | Publication date | Patent family member(s) | | Publication date |
|---|---|---|---|---|---|
| US 2008127125 | A1 | 29-05-2008 | AU | 2007349213 A1 | 25-09-2008 |
| | | | CA | 2662558 A1 | 25-09-2008 |
| | | | CN | 101529436 A | 09-09-2009 |
| | | | EP | 2076863 A2 | 08-07-2009 |
| | | | JP | 2010508583 T | 18-03-2010 |
| | | | KR | 20090082176 A | 29-07-2009 |
| | | | RU | 2009115656 A | 27-10-2010 |
| | | | WO | 2008115279 A2 | 25-09-2008 |
| WO 2009108245 | A2 | 03-09-2009 | EP | 2240857 A2 | 20-10-2010 |
| | | | US | 2011035601 A1 | 10-02-2011 |
| US 2005028132 | A1 | 03-02-2005 | NONE | | |

For more details about this annex : see Official Journal of the European Patent Office, No. 12/82